# EUROPEAN PATENT SPECIFICATION

(11) **EP 2 654 519 B1**
(45) Date of publication and mention of the grant of the patent: **13.04.2016**
(21) Application number: 11815579.5
(22) Date of filing: 13.12.2011
(51) Int. Cl.: A47J 27/18

(54) **METHOD AND APPARATUS WITH LIGHTING SYSTEM FOR BREWING INGREDIENTS IN A SOLVENT**
VERFAHREN UND VORRICHTUNG MIT BELEUCHTUNGSSYSTEM ZUM ZUBEREITEN VON INHALTSSTOFFEN IN EINEM LÖSUNGSMITTEL
PROCÉDÉ ET APPAREIL À SYSTÈME D'ÉCLAIRAGE POUR FAIRE INFUSER DES INGRÉDIENTS DANS UN SOLVANT

(30) Priority: 22.12.2010 WO PCT/CN2010/080096
(43) Date of publication of application: 30.10.2013
(73) Proprietor: Koninklijke Philips N.V., 5656 AE Eindhoven (NL)
(72) Inventor: KELLY, Declan, Patrick, 5656 AE Eindhoven (NL); WANG, Guangwei, 5656 AE Eindhoven (NL)
(74) Representative: Coops, Peter
(86) International application number: PCT/IB2011/055644
(87) International publication number: WO 2012/085757

(56) References cited:
- WO-A1-02/00072
- DE-A1-102005 006 720
- DE-U1-202008 016 449
- US-A1- 2008 175 963

## Description

### FIELD OF THE INVENTION

The invention relates to an apparatus for brewing ingredients in a solvent.

The invention may be used in the field of beverage preparation.

### BACKGROUND OF THE INVENTION

Preparing beverages by brewing (raw) ingredients in a solvent is a known process. For example, tea is prepared by brewing (i.e. infusing) tea leaves (or tea bags) used as ingredients, in hot/boiling water used as the solvent. The same process may be used when beverages are prepared from different ingredients, such as various herbs, plant leaves or plant roots.

After a given time duration, ingredients are taken out of the solvent, and the resulting solvent corresponds to the prepared beverage. Such beverages are usually prepared using dedicated domestic appliances, such as a tea maker. To facilitate users to get information on the operating state of such domestic appliances, appliances often include some visual indication. For example, the most basic indication uses a green light which is switched-on when the domestic appliance is switched-on, and uses a red light which is switched-on when the appliance is switched-off.

More sophisticated solutions for displaying visual indications are also known, for example from published patent application WO 2003/020096A1. This document discloses a domestic appliance such as a kettle, coffee maker, and toaster or similar, that includes a fluid chamber which is provided with a light to diffuse through the fluid and which light is visible through a transparent or translucent portion in the exterior wall of the wall of the chamber. The light may be controlled to show different operative states of the appliance and provide a visual area of indication of the operative state. For example, a first light emitting a specific color is switched-on during the heating of water by a heating element. When the water reaches the boiling point, the heating element is switched-off entirely or reduced to simply maintain heat in the water. During this period, a second light can be used to diffuse a different color through the water to provide an immediate visual indication to a user of the change of the operative state

DE 10 2005 006 720 A1 discloses a kettle with a temperature sensor, a partially transparent container and a light source, wherein, depending on a continuously taken temperature of the liquid inside the container the light colour is changed.

US 2008/0175963 A1 discloses a system. method and apparatus for detecting the pH level inside a beverage container by means of a pH level sensor and by providing a signal to a user depending on the output of said sensor, e.g. to a display.

However, although those advanced solutions for displaying a visual indication may help users understand in which operating state the appliance is working, those solutions are still limited for the reason that the visual indication provided is based on pre-set operation modes, meaning that a user cannot have any visual indication directly linked to characteristics of the beverage being prepared. As a result, those visual indications are not very accurate.

### OBJECT AND SUMMARY OF THE INVENTION

It is an object of the invention to propose an apparatus for brewing ingredients in a solvent, comprising a lighting system for providing an improved visual indication.

To this end, the system according to the invention comprises:
- a container for containing said ingredients,
- a sensor for measuring a characteristic of said solvent,
- a lighting system for generating a light beam that travels towards said container, said lighting system comprising a circuit for changing, based on the measured characteristic, a lighting property of said light beam, wherein said sensor is one of the following sensors:
- a pH sensor, said measured characteristic being the pH value of said solvent, or
- an electro-conductivity sensor, said measured characteristic being the electro-conductivity value of said solvent, or
- a color sensor, said measured characteristic being the color value of said solvent.

According to such an invention, the visual indication is directly based on characteristics of the beverage being prepared, which provides a user with more accurate visual information on the state of preparation, and also greatly improves user-experience of a person using the apparatus.

The invention also relates to a method comprising various steps carried out by an apparatus according to the invention.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner:
- Fig. 1A and Fig. 1B: depict an apparatus according to the invention for brewing ingredients in a solvent,
- Fig. 1C and Fig. 1D: depict an apparatus according to the invention for brewing ingredients in a solvent,
- Fig. 3: illustrates an example of the intensity variation of LEDs used in an apparatus according to the invention,
- Fig. 4: illustrates an example of the intensity variation of LEDs used in an apparatus according to the invention,
- Fig. 5: depicts a method according of the invention of generating visual indication during the process of brewing ingredients in a solvent in a container.

### DETAILED DESCRIPTION OF THE INVENTION

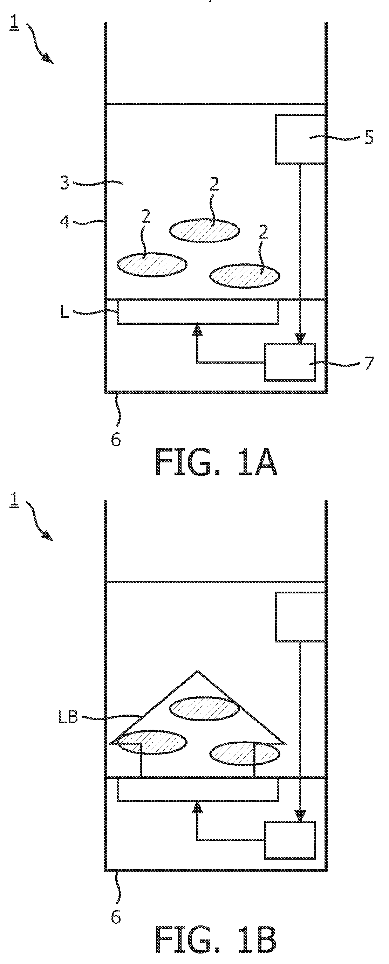

Fig.1A and Fig.1B depict an apparatus 1 according to the invention for brewing ingredients 2 in a solvent 3. The apparatus comprises:
- a container 4 for holding said ingredients,
- a sensor 5 for measuring a characteristic of said solvent,
- a lighting system 6 for generating a light beam that travels towards said container, said lighting system comprising a circuit 7 for changing, based on the measured characteristic, a lighting property of said light beam, wherein said sensor is one of the following sensors:
- a pH sensor, said measured characteristic being the pH value of said solvent, or
- an electro-conductivity sensor, said measured characteristic being the electro-conductivity value of said solvent, or
- a color sensor, said measured characteristic being the color value of said solvent.

For example, ingredients may correspond to any types of tea leaves, coffee, herbs, roots, fruits, or a mix of those ingredients. For example, the solvent may correspond to water, mineral water, tap water, salted water, alcohol, or a mix of those solvents. The solvent may be heated by a heating system placed at the bottom part of the container (not shown).

The light beam is illustrated in Fig.1B by the large arrow LB which exits from the lighting system 6, and the light beam LB propagates inside the container 4. Preferably, the container 4 is made of transparent material, such as glass or PVC, such that light beam LB is visible to a user watching or using apparatus 1.

In a first embodiment, the sensor 5 is a pH sensor, and the measured characteristic is the pH value of the solvent. As known in the art, pH measures the acidity/causticity of a given solution. In the present case, the pH sensor is dedicated to measure the pH value of the solvent. During brewing, as the amount (i.e. concentration) of solids/compounds extracted from ingredients increases with time, the pH value of the solvent may decrease with time. Any kind of known pH sensor may be used. The pH sensor is for example placed along a wall of container 4, and is connected to the circuit 7, for example electrically connected if the pH sensor is adapted to deliver a voltage/current signal reflecting the pH value of the solvent. The voltage/current signal may for example be proportional to the pH value of the solvent. The circuit 7 is adapted to change a lighting property of the light beam LB, based on the voltage/current signal. The light beam LB can be generated by any types of lamps L, as long as the property of the light beam LB generated by those lamps can be modified by circuit 7. Preferably, the lighting system comprises light emitting diodes (LED) to generate the light beam LB. For example, three LEDs (not shown) are placed next to each other: one red LED, one green LED, one blue LED. When the three LEDs are switched-on at the same time, varying the intensity of each LED independently will result in a change of a lighting property of the light beam. In the present case, the voltage/current signal is directly used by circuit 7 to change (i.e. increase or decrease) the intensity of the LEDs.

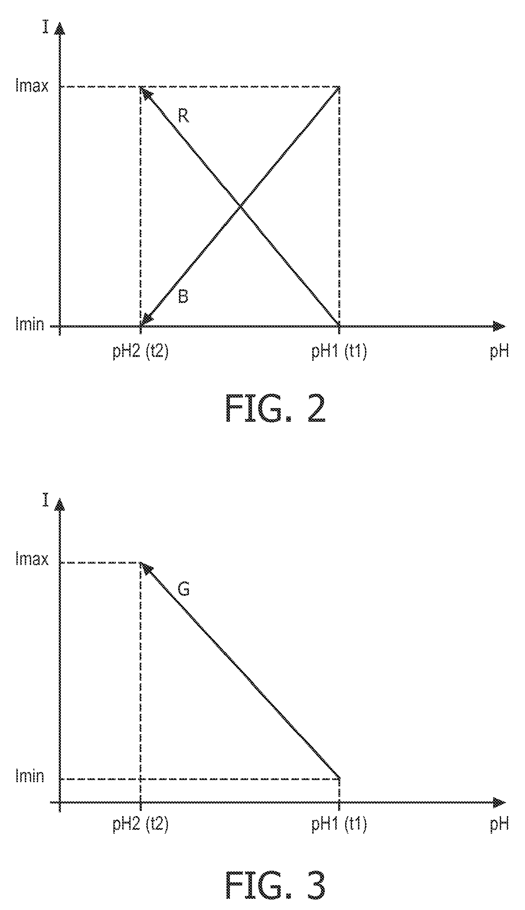

The lighting property which is changed may correspond to the color of the light beam LB. Fig.2 illustrates an example of the intensity variation of two LEDs, one red LED (R) and one blue LED (B), depending on the pH value of the solvent. At time t1 (start of the brewing process) the pH value is pH1, the intensity of the red LED is I=Imin=0, and the intensity of the blue LED is I=Imax, resulting in a blue color of the light beam LB. At time t2 (end of the brewing process) the pH value is pH2, the intensity of the red LED is I=Imax, and the intensity of the blue LED is I=Imin=0, resulting in a red color of the light beam LB. In between t1 and t2, the resulting color of the light beam gradually changes from blue to red.

With such a change of the light pattern, a user can directly observe the change of the state of the brewing process with respect to time.

The lighting property which is changed may also correspond to the intensity of the light beam LB. Fig.3 illustrates an example of the intensity variation of one green LED (G), depending on the pH value of the solvent. At time t1 (start of the brewing process) the pH value is pH1, the intensity of the green LED is I=Imin, resulting in the light beam LB having a low intensity of green. At time t2 (end of the brewing process) the pH value is pH2, the intensity of the green LED is I=Imax, resulting in the light beam LB having a high intensity of green. In between t1 and t2, the resulting intensity of the light beam gradually changes from a low intensity of green to a high intensity of green. A LED having the same dominant color as the ingredients can preferably be used, for example a green LED can be used if ingredients correspond to leaves of green tea. With such a change of the light beam intensity, a user can directly observe the change of the concentration of the solvent with respect to time during brewing.

The lighting property which is changed may also correspond to a light pattern of the light beam: For example, based on the description given for Fig.3, a light pattern may correspond to a sudden blinking of the LED intensity when the pH value of the solvent reaches pH2, or a gradual blinking with a blinking frequency varying with the pH value (e.g. a low blinking frequency at time t1 gradually changing to a high blinking frequency at time t2). With such a change of the light pattern, a user can directly observe the change of the state of the brewing process with respect to time.

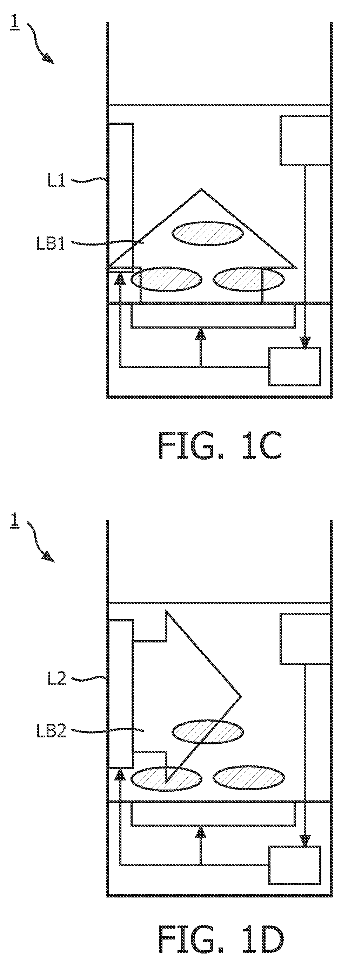

The lighting property which is changed may also correspond to the direction of the light beam. In a first example as illustrated in Fig.1C and Fig.1D depicting an apparatus based on an apparatus 1 as in Fig.1A and Fig.1B, lamps L are split in two separate blocks of lamps L1 and L2, which are placed on different parts of the container 4. L1 is placed on the horizontal bottom part of the container while L2 is placed along the vertical wall of the container. L1 is intended to generate a light beam LB1 extending along the vertical direction, while L2 is intended to generate a light beam LB2 extending along the horizontal direction. In this case circuit 7 switches-on lamp L1 only when the pH value of the solvent is above a given threshold (e.g. a preset value), and switches-on lamp L2 only when the pH value of the solvent is below this given threshold. A change of the direction of the light beam from vertical to horizontal (or vice versa) gives a visual indication to a user about the brewing status, for example if this change of the light beam direction occurs when the brewing is about to be finished.

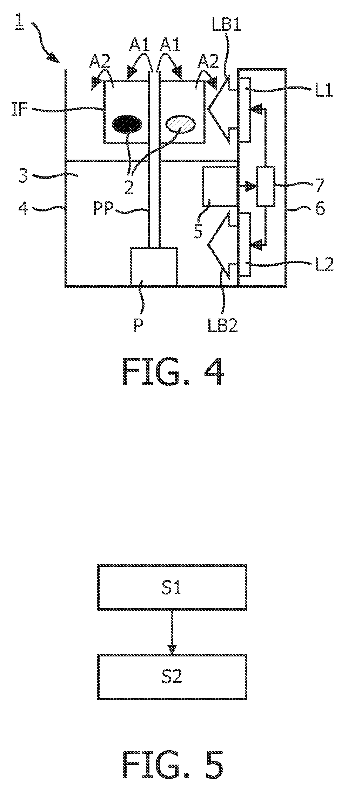

In a second example as illustrated in Fig.4, in addition to elements described with reference to Fig.1, this apparatus comprises an infuser IF placed in the container 4, and the infuser is intended to contain the ingredients 2. At the bottom part of the container 4, a pump P is placed, and the outlet of the pump is connected to a pipe PP reaching an upper part of infuser IF. The pump, for example an electrical pump, is intended to pump the solvent 3 from the lower part of container 4 to the upper part of the infuser. The solvent leaving pipe PP, as illustrated by arrows A1, drops into infuser IF where the brewing of ingredients is performed. The solvent in infuser IF then drops back into container 4, which is illustrated by arrows A2. The steps of: Pumping the solvent from the container 4 into the pipe PP, then infusing the ingredients in the infuser IF in a solvent contained in the infuser, and subsequently the solvent in the infuser dropping back into the container, constitute a closed brewing cycle that is continued until the brewing process is stopped. In this case, circuit 7 switches-on lamp L1 only when the pH value of the solvent is above a given threshold (e.g. a pre-set value), reflecting the fact that the brewing needs to be continued, and switches-on lamp L2 only when the pH value of the solvent is below this given threshold, reflecting the fact that the brewing is finished. A shift in the direction of the light beam from a first horizontal direction to a second horizontal direction gives a visual indication to a user about the brewing status.

In a second embodiment of an apparatus as depicted in Fig.1A and Fig.1B, the sensor 5 is an electro-conductivity (EC) sensor, and the measured characteristic is the EC value of the solvent. As known in the art, EC measures the ability of a given solution to conduct electric current. In the present case, the EC sensor is dedicated to measure the EC value of the solvent. During brewing, as the amount (i.e. concentration) of solids/compounds extracted from ingredients increases with time, the EC value of the solvent increases with time. Any types of EC sensor known per se in the art may be used, such as electrode-type sensors based on so-termed voltammetry methods, inductance-type sensors based on the induction principle. The EC sensor is for example placed along a wall of container 4, and is connected to the circuit 7, for example electrically connected if the EC sensor is adapted to deliver a voltage/current signal reflecting the EC value of the solvent. The voltage/current signal may for example be proportional to the EC value of the solvent. The circuit 7 is adapted to change a lighting property of the light beam LB, based on this voltage/current signal. The light beam LB is generated by any types of lamps L, as long as the property of the light beam generated by those lamps can be modified by circuit 7. Preferably, the lighting system comprises light emitting diodes (LED) to generate the light beam LB. For example, three LEDs (not shown) are placed next to each other: one red LED, one green LED, one blue LED. When the three LEDs are switched-on at the same time, a variation of the intensity of each LED results in a change of a lighting property of the light beam LB. In the present case, the voltage/current signal is directly used by circuit 7 to change (i.e. increase or decrease) the intensity of the LEDs.

Such a type of sensor can be used, in a similar way as the pH sensor, to change the lighting property of the light beam LB, i.e. either the color, intensity, light pattern or direction.

In a third embodiment of an apparatus as depicted in Fig.1A and Fig.1B, the sensor 5 is a color sensor, and the measured characteristic is the color value of the solvent, for example expressed as three components RGB (red/green/blue). In the present case, the color sensor is dedicated to measure the color value of the solvent. During brewing, as the amount (i.e. concentration) of solids/compounds extracted from ingredients increases with time, the color value of the solvent increases with time. Any kind of known color sensor may be used. The color sensor is for example placed along a wall of container 4, and is connected to the circuit 7, for example electrically connected if the color sensor is adapted to deliver a voltage/current signal reflecting the color value of the solvent. The voltage/current signal may for example be proportional to the color value of the solvent. The circuit 7 is adapted to change a lighting property of the light beam LB, based on the voltage/current signal. The light beam LB is generated by any types of lamps L, as long as the property of the light beam generated by those lamps can be modified by circuit 7. Preferably, the lighting system comprises light emitting diodes (LED) to generate the light beam LB. For example, three LEDs (not shown) are placed next to each other: one red LED, one green LED, one blue LED. When the three LEDs are switched-on at the same time, a variation of the intensity of each LED results in a change of a lighting property of the light beam. In the present case, the voltage/current signal is directly used by circuit 7 to change (i.e. increase or decrease) the intensity of each LED. The light beam's lighting property which is changed can be the color of the light beam LB. For example, the circuit 7 can set the intensity of the RGB components of the LEDs to the same value as the RGB components generated by the color sensor, so as to generate a light beam having the same color as the solvent. The circuit 7 can also set the intensity of the RGB components of the LEDs so as to be complementary in value (e.g. according to the standard and well-known "RYB Color Wheel") to the RGB components generated by the color sensor, in order to generate a light beam whose color is complementary to that of the solvent.

The lighting property of the light beam which is changed can also be the intensity of the light beam LB. For example, the circuit 7 can set the intensity of the RGB components of the LEDs so as to generate a light beam having a high intensity if the color sensor indicates a dark color for the solvent, or so as to generate a light beam having a low intensity if the color sensor indicates a bright color for the solvent.

The lighting property of the light beam which is changed can also be the light pattern of the light beam. For example, the circuit 7 can periodically switch-on the LEDs with a given frequency so as to cause blinking if the color of the solvent reaches a given threshold, or it can make this frequency proportional to the color value indicated by the color sensor so as to cause the blinking to accelerate with time during brewing.

In a preferred embodiment, instead of using a lighting system comprising lamps L, L1, L2 corresponding to three (or a different number of) light emitting diodes (LED) to generate the light beam LB, a so-called light skin element, known per se in the art, can be used. The light skin element is equivalent to a two-dimensional array of LEDs which can be individually controlled by the circuit 7, in a similar way to a LED screen display. The light skin has a very small thickness in the order of one millimetre, and can be mapped to non-flat structures for example in order to cover part of the structure of the apparatus 1, such as an external part of the lighting system 6, and/or part of the container 4, as illustrated by rectangles L, L1 and L2. Like in the case of three separate LEDs mentioned previously, the light beam LB generated by the light skin has a lighting property which is changed by circuit 7, for example by varying its color and/or intensity in a uniform way, depending on the current/voltage generated by sensor 5. Alternatively, the light beam LB generated by the light skin has a lighting property which is changed by circuit 7, for example by varying its color and/or intensity in a nonuniform way, depending on the current/voltage generated by sensor 5, such that a first area of the light skin has a first color/intensity and a second area of the light skin has a second color/intensity, with the possibility to create a color/intensity fade-in/fade-out effect in between those two areas. By using a light skin element for lamps L, L1 and L2 different light effects can be generated to reflect the brewing status of the solvent.

Fig.5 depicts a method according to the invention of generating visual indication during the process of brewing ingredients in a solvent in a container. Said method comprises the steps of:
- measuring (S1) a characteristic of said solvent,
- generating (S2) a light beam (LB) that travels towards said container, said light beam having a lighting property based on the measured characteristic.

This method corresponds to steps carried out in an apparatus according to Fig.1A, Fig.1B, Fig.1C, Fig.1D, or Fig.4.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measures cannot be used to advantage.

## Claims

1. Apparatus (1) for brewing ingredients in a solvent, said apparatus comprising:
- a container (4) for containing said ingredients,
- a sensor (5) for measuring a characteristic of said solvent,
- a lighting system (6) for generating a light beam (LB) that travels towards said container, said lighting system comprising a circuit (7) for changing, based on the measured characteristic, a lighting property of said light beam, **characterized in that** said sensor (5) is one of the following sensors:
- a pH sensor, said measured characteristic being the pH value of said solvent, or
- an electro-conductivity sensor, said measured characteristic being the electro-conductivity value of said solvent, or
- a color sensor, said measured characteristic being the color value of said solvent.

2. Apparatus as claimed in claim 1 comprising light emitting diodes to generate said light beam (LB).

3. Apparatus as claimed in claim 1 comprising a light skin element to generate said light beam (LB).

4. Apparatus as claimed in any one of claims 1 to 3, wherein said lighting property is the color of said light beam (LB).

5. Apparatus as claimed in any one of claims 1 to 3, wherein said lighting property is the intensity of said light beam (LB).

6. Apparatus as claimed in any one of claims 1 to 3, wherein said lighting property is a light pattern of said light beam (LB).

7. Apparatus as claimed in any one of claims 1 to 3, wherein said lighting property is the direction of said light beam (LB).

8. Method of generating visual indication during the process of brewing ingredients in a solvent in a container, said method comprising the steps of:
- measuring (S1) a characteristic of said solvent,
- generating (S2) a light beam (LB) that travels towards said container, said light beam having a lighting property based on the measured characteristic, **characterized in that** said step of measuring (S1) is one of the following steps:
- measuring by using a pH sensor, said measured characteristic being the pH value of said solvent, or
- measuring by using an electro-conductivity sensor, said measured characteristic being the electro-conductivity value of said solvent, or
- measuring by using a color sensor, said measured characteristic being the color value of said solvent.

## Patentansprüche

1. Vorrichtung (1) zum Zubereiten von Inhaltsstoffen in einem Lösungsmittel, wobei die Vorrichtung Folgendes umfasst:
- einen Behälter (4) zum Fassen der Inhaltsstoffe,
- einen Sensor (5) zum Messen eines Merkmals des Lösungsmittels,
- ein Beleuchtungssystem (6) zum Erzeugen eines Lichtstrahls (LB), der den Behälter durchläuft, wobei das Beleuchtungssystem einen Schaltkreis (7) zum Ändern einer Beleuchtungseigenschaft des Lichtstrahls, basierend auf dem gemessenen Merkmal, umfasst, **dadurch gekennzeichnet, dass** der Sensor (5) einer von folgenden Sensoren ist:
- ein pH-Sensor, wobei das gemessene Merkmal der pH-Wert des Lösungsmittels ist, oder
- ein Leitfähigkeitssensor, wobei das gemessene Merkmal der Wert der elektrischen Leitfähigkeit des Lösungsmittels ist, oder
- ein Farbsensor, wobei das gemessene Merkmal der Farbwert des Lösungsmittels ist.

2. Vorrichtung nach Anspruch 1, umfassend lichtemittierende Dioden zum Erzeugen des Lichtstrahls (LB).

3. Vorrichtung nach Anspruch 1, umfassend ein Lichthautelement zum Erzeugen des Lichtstrahls (LB).

4. Vorrichtung nach einem der Ansprüche 1 bis 3, wobei die Beleuchtungseigenschaft die Farbe des Lichtstrahls (LB) ist.

5. Vorrichtung nach einem der Ansprüche 1 bis 3, wobei die Beleuchtungseigenschaft die Stärke des Lichtstrahls (LB) ist.

6. Vorrichtung nach einem der Ansprüche 1 bis 3, wobei die Beleuchtungseigenschaft ein Lichtmuster des Lichtstrahls (LB) ist.

7. Vorrichtung nach einem der Ansprüche 1 bis 3, wobei die Beleuchtungseigenschaft die Richtung des Lichtstrahls (LB) ist.

8. Verfahren zum Erzeugen einer visuellen Anzeige beim Prozess des Zubereitens von Inhaltsstoffen in einem Lösungsmittel in einem Behälter, wobei das Verfahren folgende Schritte umfasst:
- Messen (S1) eines Merkmals des Lösungsmittels,
- Erzeugen (S2) eines Lichtstrahls (LB), der den Behälter durchläuft, wobei der Lichtstrahl eine Beleuchtungseigenschaft, basierend auf dem gemessenen Merkmal, aufweist, **dadurch gekennzeichnet, dass** der Schritt des Messens (S1) einer der folgenden Schritte ist:
- Messen durch Verwenden eines pH-Sensors, wobei das gemessene Merkmal der pH-Wert des Lösungsmittels ist, oder
- Messen durch Verwenden eines Leitfähigkeitssensors, wobei das gemessene Merkmal der Wert der elektrischen Leitfähigkeit des Lösungsmittels ist, oder
- Messen durch Verwenden eines Farbsensors, wobei das gemessene Merkmal der Farbwert des Lösungsmittels ist.

## Revendications

1. Appareil (1) destiné à faire infuser des ingrédients dans un solvant, ledit appareil comprenant :
- un récipient (4) destiné à contenir lesdits ingrédients,
- un capteur (5) destiné à mesurer une caractéristique dudit dissolvant,
- un système d'éclairage (6) destiné à générer un faisceau lumineux (LB) qui se déplace vers ledit récipient, ledit système d'éclairage comprenant un circuit (7) destiné à changer, sur la base de la caractéristique mesurée, une propriété d'éclairage dudit faisceau lumineux, **caractérisé en ce que** ledit capteur (5) est l'un des capteurs suivants :
- un capteur de pH, ladite caractéristique mesurée étant la valeur de pH dudit solvant, ou
- un capteur d'électroconductivité, ladite caractéristique mesurée étant la valeur d'électroconductivité dudit solvant, ou
- un capteur de couleur, ladite caractéristique mesurée étant la valeur de couleur dudit solvant.

2. Appareil selon la revendication 1, comprenant des diodes électroluminescentes destinées à générer ledit faisceau lumineux (LB).

3. Appareil selon la revendication 1, comprenant un élément de revêtement lumineux destiné à générer ledit faisceau lumineux (LB).

4. Appareil selon l'une quelconque des revendications 1 à 3, dans lequel ladite propriété d'éclairage est la couleur dudit faisceau lumineux (LB).

5. Appareil selon l'une quelconque des revendications 1 à 3, dans lequel ladite propriété d'éclairage est l'intensité dudit faisceau lumineux (LB).

6. Appareil selon l'une quelconque des revendications 1 à 3, dans lequel ladite propriété d'éclairage est un motif lumineux dudit faisceau lumineux (LB).

7. Appareil selon l'une quelconque des revendications 1 à 3, dans lequel ladite propriété d'éclairage est le sens dudit faisceau lumineux (LB).

8. Procédé de génération d'une indication visuelle au cours du processus destiné à faire infuser des ingrédients dans un solvant dans un récipient, ledit procédé comprenant les étapes de :
- la mesure (S1) d'une caractéristique dudit solvant,
- la génération (S2) d'un faisceau lumineux (LB) qui se déplace vers ledit récipient, ledit faisceau lumineux ayant une propriété d'éclairage basée sur la caractéristique mesurée, **caractérisé en ce que** ladite étape de mesure (S1) est l'une des étapes suivantes :
- la mesure par l'utilisation d'un capteur de pH, ladite caractéristique mesurée étant la valeur de pH dudit solvant, ou
- la mesure par l'utilisation d'un capteur d'électroconductivité, ladite caractéristique mesurée étant la valeur d'électroconductivité dudit solvant, ou
- la mesure par l'utilisation d'un capteur de couleur, ladite caractéristique mesurée étant la valeur de couleur dudit solvant.
